# EUROPÄISCHE PATENTSCHRIFT

(11) **EP 0 461 076 B1**
(45) Veröffentlichungstag und Bekanntmachung des Hinweises auf die Patenterteilung: **15.12.1993**
(21) Anmeldenummer: 91810419.1
(22) Anmeldetag: 04.06.1991
(51) Int. Cl.: B65B 23/14, B65G 47/08

(54) **Verfahren zum Abtrennen einer Gruppe aufrechtstehender, aneinandergereihter, flacher Gegenstände und Vorrichtung zur Ausführung dieses Verfahrens**
Method for separating a group of vertically positioned, lined-up flat articles and apparatus for carrying out this method
Procédé pour séparer en position verticale et en file, un groupe d'objets plats et dispositif de mise en oeuvre de ce procédé

(30) Priorität: 06.06.1990 CH 1899/90
(43) Veröffentlichungstag der Anmeldung: 11.12.1991
(73) Patentinhaber: SIG Schweizerische Industrie-Gesellschaft, 8212 Neuhausen am Rheinfall (CH)
(72) Erfinder: Ruegg, Franz, CH-8212 Neuhausen am Rheinfall (CH)
(74) Vertreter: Schick, Carl

(56) Entgegenhaltungen:
- CH-A- 426 611
- DE-A- 2 751 749
- DE-B- 1 102 637
- GB-A- 1 032 543
- US-A- 3 170 559

## Beschreibung

Die vorliegende Erfindung betrifft ein Verfahren zum Abtrennen einer Gruppe aufrechtstehender, aneinandergereihter, flacher Gegenstände, insbesondere Biskuits, gemäss dem Oberbegriff des Patentanspruchs 1 und eine Vorrichtung zur Ausführung dieses Verfahrens.

Die CH-Patentschrift Nr. 601 056 beschreibt eine Kippvorrichtung für rechteckige Biskuits mit einer Ausgangsbahn, auf welcher die gekippten Biskuits durch Mitnehmer in einer in der Profilebene liegenden Richtung befördert werden. Dabei verläuft die Ausgangsbahn quer zu zwei oder mehreren Eingangsbahnen, in welchen die aufrechtstehenden Biskuits in zu ihrer Profilebene senkrechter Richtung gefördert und Absenk- und Kippmechanismen zugeführt werden. In dieser Vorrichtung weist jeder dieser Mechanismen ein bewegliches Stützelement für auf dasselbe gebrachte, aufrechte Biskuits auf, die nach Bewegung dieses Elementes in eine Freigabestellung auf einem Abholelement abgesenkt und hierauf von einem Kippelement auf die Ausgangsbahn gekippt werden.

Eine solche Vorrichtung ist sehr vorteilhaft für zerbrechliche Biskuits, da die Absenk- und Kippmechanismen sehr schonend arbeiten. Wenn aber eine sehr grosse Leistung gefordert wird, soll nicht die Arbeitsgeschwindigkeit dieser Mechanismen erhöht, sondern mehr Eingangskanäle mit zugehörigen Mechanismen vorgesehen werden.

Aus der DE-B-1 102 637 ist ein Verfahren zum Fördern und Unterteilen von in einer Reihe zugeführten Biskuits bekannt, die in Gruppen gleicher Stückzahl getrennt werden, wobei die abzuteilende Gruppe auf eine eine Stufe tiefer liegende Stützfläche abgesenkt wird, und wobei im Bereich dieser Stufe zunächst ein Trennspalt zwischen dem letzten Biskuit der Gruppe und dem ersten Buiskuit der ihr nachfolgenden Reihe gebildet wird, ehe die Weiterbewegung der Gruppe quer zur Längsrichtung der Reihe erfolgt. Dieser Trennspalt wird durch einen hin- und hergehenden Schieber bewirkt, der die Biskuits nur im Randbereich erfasst, was zu unzulässigen Randverletzungen der Biskuits führt. Die entsprechende Vorrichtung umfasst zudem aufwendige Einrichtungen, wie Nocken, Hebelgestänge und eine Trennschiene. Dieses bekannte Verfahren erweist sich als nachteilig auch im Hinblick auf die Stillstände eines intermittierend bewegten Förderers und eines kompliziert zu steuerndes Querschiebers, die die Leistung stark reduzieren.

Bei den bekannten Verfahren stellt sich daher die Aufgabe, sie so zu gestalten, dass eine direkte Erhöhung der Geschwindigkeit bzw. der Leistung möglich ist.

Diese Aufgabe wird erfindungsgmäss durch ein Verfahren nach der DE-B-1 102 637 mit den im kennzeichnenden Teil des Patentanspruchs 1 angegebenen Merkmalen gelöst. Weitere vorteilhafte Ausgestaltungen der Erfindung sind in den abhängigen Ansprüchen angegeben.

Im folgenden wird die Erfindung beispielsweise anhand einer Zeichnung näher erläutert. Es zeigen:
Fig. 1 bis 4 eine schematische Darstellung des Bewegungsablaufs der Biskuits gemäss dem Verfahren nach der vorliegenden Erfindung,
Fig. 5 eine perspektivische Darstellung der Vorrichtung zur Ausführung eines solchen Verfahrens,
Fig. 6 eine schematische Seitenansicht einer solchen Vorrichtung,
Fig. 7 eine Ansicht des Haltemittels einer solchen Vorrichtung,
Fig. 8 einen Schnitt VIII-VIII von Fig. 7, und
Fig. 9 einen Schnitt IX-IX von Fig. 7.

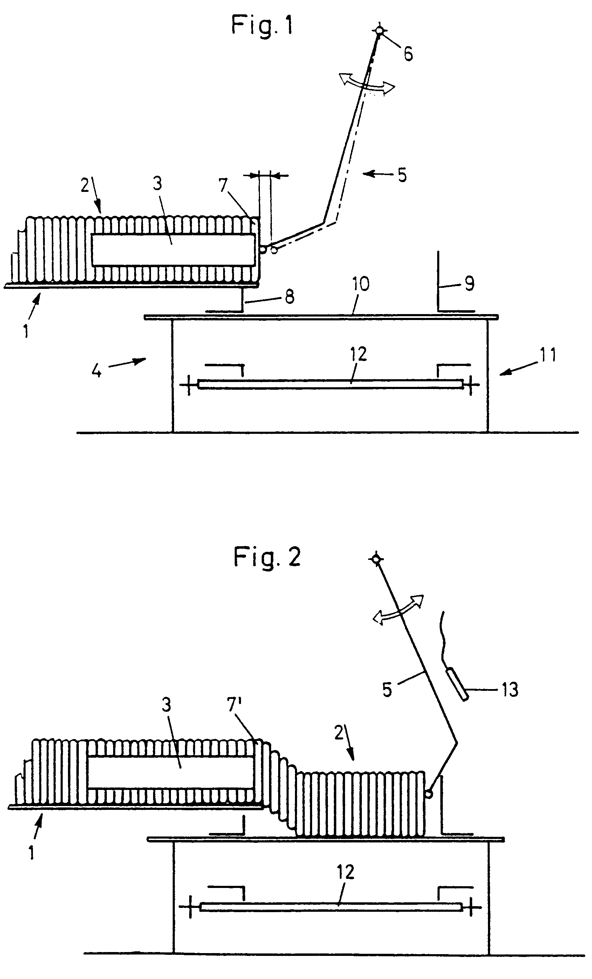

Die Vorrichtung nach Fig. 1 weist eine Führung 1 für einen Strang 2 von Biskuits auf, die seitlich von einer sogenannten Bremse 3 gehalten werden, die sich mehr oder weniger öffnen kann. Die Führung 1 ist in einem kleinen bestand über eine Wippe oder Kippvorrichtung 4 erhöht, jedoch nur teilweise über diese hineinragend angeordnet, wobei diese Wippe 4 auch ein Zwischentransportmittel anderer Art sein könnte. Ein Finger 5 ist um einen Drehpunkt 6 schwenkbar gelagert, derart, dass die Spitze des Fingers 5 in der einen Schwenkposition das letzte von der Bremse 3 gehaltene Biskuit 7 etwa in seiner Mitte halten kann. Die Wippe 4 weist zwei vertikale Wände 8 und 9 auf, zwischen denen auf eine Haltefläche 10 der Wippe 4 eine vorbestimmte Anzahl oder Gruppe Biskuits aufgenommen werden kann. Unterhalb der Haltefläche 10 befindet sich eine Transportkette 11, die mit transversalen, in gleichmässigen Abständen gehaltenen Mitnehmern 12 versehen ist.

Die Vorrichtung nach Fig. 1 funktioniert folgendermassen:
Die Biskuits 2 werden auf der Führung 1 mit geöffneter Bremse nach vorne gestossen, indem die Spitze des Fingers 5 das Biskuit 7 und somit den Strang in einer begleitenden Bewegung (in Fig. 1 nach rechts) hält.

Wie in Fig. 2 dargestellt, fällt somit in einem ersten Verfahrensschritt eine ganze Gruppe Biskuits von der erhöhten Lage der Führung 1 auf die etwas niedrigere Lage der Haltefläche 10 herunter. In diesem Verfahrensschritt bewegt sich der Finger 5 so weit nach rechts bis er einen Sensor 13 beeinflusst, um daraufhin die Bremse 3 zu schliessen, damit kein Biskuit mehr aus dem Strang herausfällt.

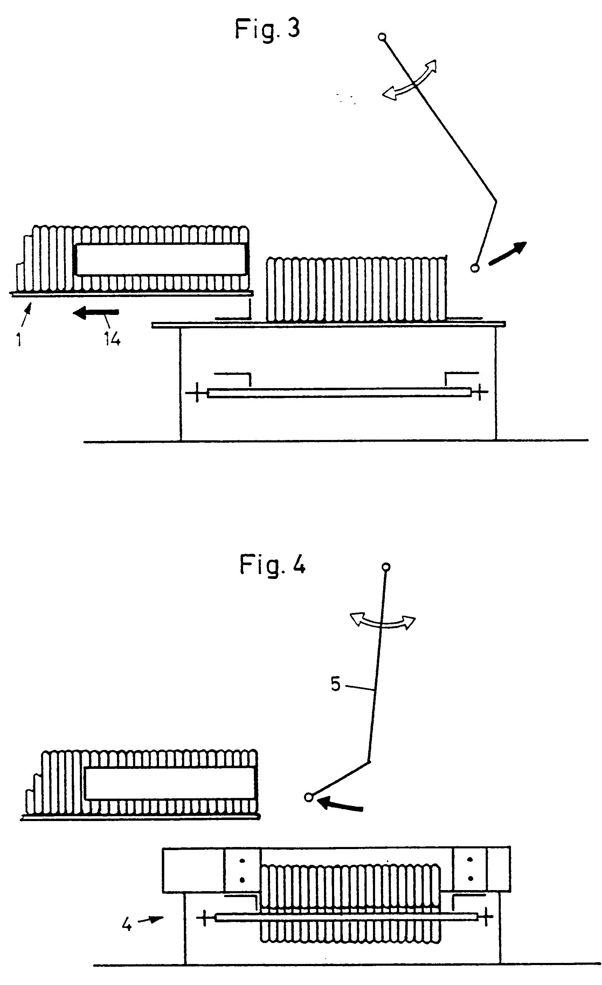

In Fig. 3 ist.ein zweiter Verfahrensschritt veranschaulicht, der darin besteht, dass die Führung 1 etwas nach links, wie durch den Pfeil 14 angedeutet, zurückgezogen wird.

In einem weiteren Verfahrensschritt kippt die Wippe 4 um, derart, dass die ganze Gruppe Biskuits auf die Transportkette 11 zwischen zwei Mitnehmern 12 herunterrutscht, indem gleichzeitig der Finger 5 nach links zurückschwenkt, um das letzte Biskuit des auf der Führung 1 verbleibenden Strangs zu halten.

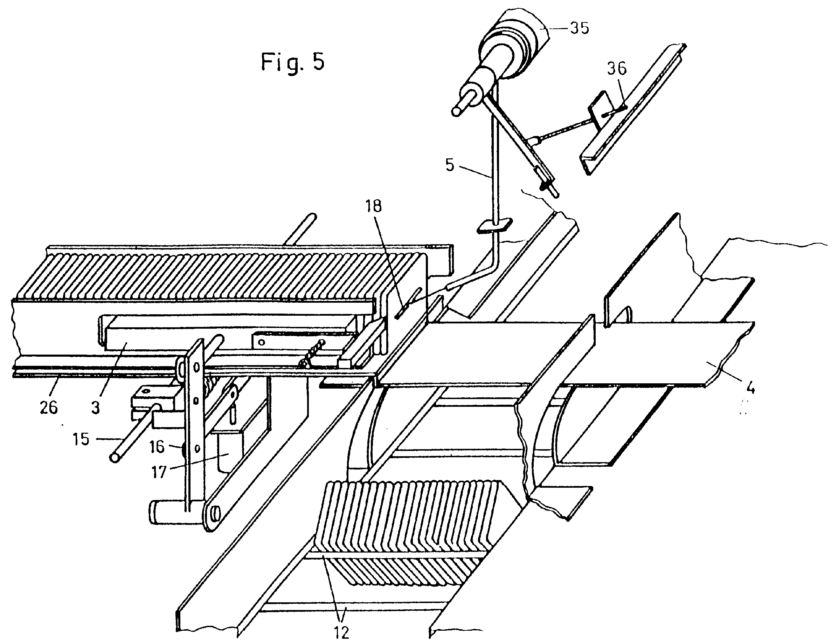

In Fig. 5 ist eine mögliche Variante einer Bremsvorrichtung dargestellt, die eine Bremse 3, einen Bremsöffner 15 und eine sogenannte Schere 16 aufweist, die mittels eines Scherenmagnets 17 betätigt werden kann. Aus Fig. 5 ist auch ersichtlich, dass die Abstände zwischen den Mitnehmern 12 kleiner als die Breite bzw. der Durchmesser der Biskuits ist, um sie gruppenweise vertikal halten zu können, und dass an der Spitze des Fingers 5 eine Querleiste 18 vorhanden ist, um das Biskuit 7 nicht punktuell, sondern flächenmässig bzw. linienmässig zu halten.

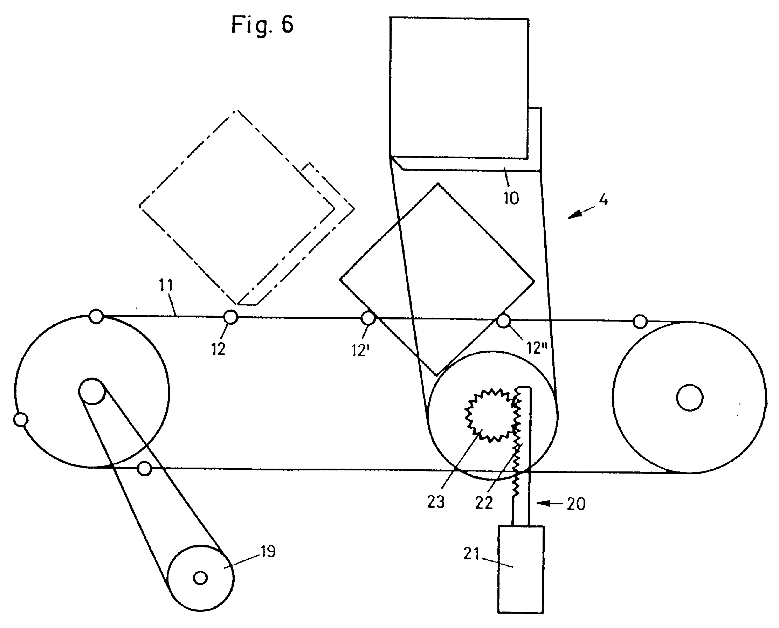

Aus Fig. 6 ist klar ersichtlich, dass die Breite der Biskuits grösser als der bestand zwischen zwei Mitnehmern 12' und 12'' ist. Die Transportkette 11 wird von einem Motor 19 über einen Kettenantrieb angetrieben. Die Kippvorrichtung 4 wird durch einen Mechanismus 20 geschwenkt, der eine mit einem Hubzylinder 21 verbundene Zahnstange 22 und ein Zahnrad 23 umfasst. Der Boden oder Haltefläche 10 der Wippe 4 könnte ebenfalls für runde Biskuits und dgl. ausgestaltet sein.

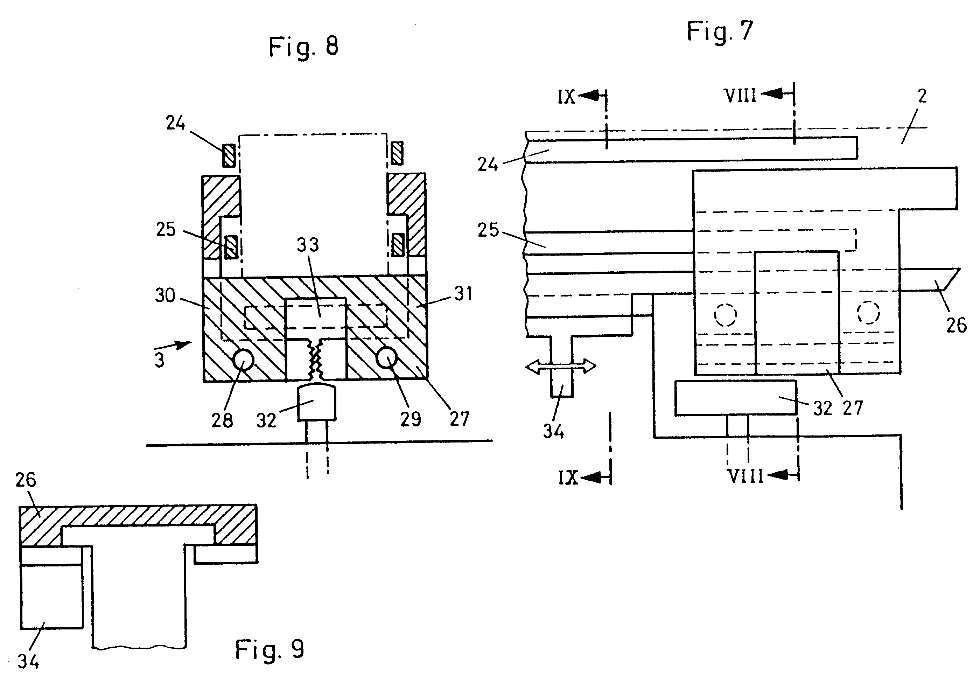

In Fig. 7 ist der Strang 2 Biskuits hinter zwei parallel gehaltenen ortsfesten Leisten 24, 25 dargestellt, die als seitliche Stützen für die Biskuits dienen, wenn die Bremse 3 geöffnet wird. Die Biskuits bewegen sich auf einem tisch 26. Der Tisch 26 weist einen Teil 27 (Fig. 7 und 8) und zwei um je eine Achse 28 bzw. 29 schwenkbar angeordnete Bremsbakken 30, 31 auf, die gemeinsam durch einen Stösser 32 geöffnet werden, wobei die Bremsbacken 30, 31 in einem Bereich nach oben gestossen werden, wo sie beispielsweise verzahnt sind. Eine Schraubfenfeder 33 sorgt dafür, dass die Bremse 3 nach Rückzug des Stössers 32 wieder geschlossen wird.

Fig. 7 zeigt, dass der tisch 26 mit dem Teil 27 und die Bremse 3 mit einem Element 34 (Fig. 9) zur Uebertragung der in Fig. 3 veranschaulichten Rückbewegung des Tisches 26 verbunden sind.

In Fig.5 sind der Finger 5, die Querleiste 18 und eine den Drehpunkt (6 in Fig. 1) bildende Magnetkupplung 35 die representativen Elemente eines Halte- und Auflagemechanismus, der auch eine Gewichts- oder Längenregulierung 36 betätigen kann.

## Patentansprüche

1. Verfahren zum Abtrennen einer Gruppe aufrechtstehender, aneinandergereihter, flacher Gegenstände, insbesondere Biskuits, aus einem auf einem Tisch (26) angeförderten ununterbrochenen Strang (2) solcher Gegenstände und Transport der Gruppe in einer unteren Transportkette (11), wobei im Bereich der zu bildenden vordersten Gruppe der Strang (2) schrittweise in Förderrichtung gefördert wird, und wobei das Strangende (7) zur Trennstellenbildung zeitweise gegen die Förderrichtung bewegt wird, dadurch gekennzeichnet, dass die Gruppe zuerst angenähert horizontal und quer zur Förderrichtung des Strangs (2) und dann bogenförmig in die untere Transportkette (11) geschwenkt wird.

2. Verfahren nach Anspruch 1, dadurch gekennzeichnet, dass der Strang (2) von einer oberen Lage auf einem Tisch (26) auf die sich in einem Abstand darunter befindende Transportkette (11) getrennt wird.

3. Verfahren nach Anspruch 2, dadurch gekennzeichnet, dass die Transportkette (11) kontinuierlich bewegt wird.

4. Vorrichtung zur Ausführung des Verfahrens nach einem der Ansprüche 1 bis 3, dadurch gekennzeichnet, dass ein Halte- und Auflagemechanismus (5,18,35) vorhanden ist, um den Strang (2) zu halten, und dass zur Gruppenbildung Mittel (34) vorhanden sind, um den Strang (2) kurzzeitig entgegen der Strangförderrichtung zu bewegen, und dass ein Zwischentransport mittel in Form einer Wippe (4) mit einer schwenkbaren Haltefläche (10) vorhanden ist, um die Haltefläche (10) zuerst angenähert horizontal und quer zur Förderrichtung des Strangs (2) und dann bogenförmig zu schwenken, so dass die vom Strangende (7) freigestellte Gruppe durch Zwischentransportmittel (4) auf darunterliegende Mitnehmer (12,12',12'') abgelegt werden.

5. Vorrichtung nach Anspruch 4, dadurch gekennzeichnet, dass die Schwenkachse der Haltefläche (10) des Zwischentransportmittels (4) und mindestens die Längsachse des Endes des Stranges (2) parallel verlaufen.

6. Vorrichtung nach Anspruch 4 oder 5, dadurch gekennzeichnet, dass die Zwischentransportmittel (4) eine Haltefläche (10) für rechteckige oder für runde Gegenstände aufweist.

7. Vorrichtung nach Anspruch 4, 5 oder 6, dadurch gekennzeichnet, dass der Halte- und Auflagemechanismus (5,18,35) einen Sensor (13) betätigt, um die Rückbewegung des Stranges (2) zu bewirken.

8. Vorrichtung nach einem der Ansprüche 4 bis 7, dadurch gekennzeichnet, dass der Halte- und Auflagemechanismus (5,18,35) eine Gewichts- und/oder Längenregulierung (36) betätigt.

9. Vorrichtung nach einem der Ansprüche 4 bis 8, dadurch gekennzeichnet, dass eine Führung (1) für einen Strang (2) von Gegenständen vorhanden ist, die auf einem Tisch (26) seitlich von einer Bremse (3) gehalten werden, die zwei schwenkbar angeordnete Bremsbacken (30,31) umfasst, die gemeinsam durch einen Stösser (32) geöffnet werden, und dass der Tisch (26) und die Bremse (3) mit Elementen (27,34) zur Uebertragung der Rückbewegung des Tisches (26) verbunden sind.

10. Vorrichtung nach einem der Ansprüche 4 bis 9, dadurch gekennzeichnet, dass der Halte- und Auflagemechanismus einen Finger (5) umfasst, dessen Anschlag (18) den Strang (2) wenigstens zeitweise in einer begleitenden Bewegung hält.

## Claims

1. Method for separating a group of vertically positioned, lined-up flat articles, in particular biscuits, from an uninterrupted string of such items which are conveyed on a table (26) and for transporting the group in a lower chain conveyor (11), wherein the string (2) is conveyed in the region of the group to be formed at the front step-by-step in the conveying direction and wherein the string end (7) is occasionally moved against the conveying direction for the purpose of forming the separating point, characterised by the fact that the group initially pivots almost horizontally and transverse to the conveying direction of the string (2) and then in the shape of an arc into the lower chain conveyor (11).

2. Method according to claim 1, characterised in that the string (2) is separated from an upper position on a table (26) onto the chain conveyor (11) located at a distance below same.

3. Method according to claim 2, characterised in that the chain conveyor (11) moves continuously.

4. Device for carrying out the method according to one of claims 1 to 3, characterised in that a retaining and supporting mechanism (5,18,35) is provided in order to retain the string (2) and that a means (34) is provided for the purpose of forming the groups in order to move the string (2) temporarily against the string conveying direction and that an intermediate transportation means is provided in the form of a rocker (4) having a pivotable retaining surface (10) in order to pivot the retaining surface (10) initially almost horizontally and transverse to the conveying direction of the string (2) and then in the shape of an arc, so that the group released from the string end (7) by virtue of the intermediate transportation means (4) is placed on the entrainer (12, 12', 12'') lying below same.

5. Device according to claim 4, characterised in that the pivot axis of the retaining surface (10) of the intermediate transportation means (4) and at least the longitudinal axis of the end of the string (2) extend parallel to each other.

6. Device according to claim 4 or 5, characterised in that the intermediate transportation means (4) comprises a retaining surface (10) for rectangular or for round objects.

7. Device according to claim 4, 5 or 6 characterised in that the retaining and supporting mechanism (5, 18, 35) actuates a sensor (13) for the purpose of initiating the reverse movement of the string (2).

8. Device according to one of claims 4 to 7, characterised in that the retaining and supporting mechanism (5,18,35) actuates a weight and/or length controlling device (36).

9. Device according to one of claims 4 to 8, characterised in that a guide (1) is provided for one string (2) of objects, which are retained on a table (26) laterally from a brake (3) which encompasses the two brake grippers disposed in a pivotable manner and which brake grippers (30,31) are opened jointly by virtue of a pusher (32) and that the table (26) and the brake (3) are connected to the elements (27,34) for the purpose of transmitting the reverse movement of the table (26).

10. Device according to one of claims 4 to 9, characterised in that the retaining and supporting mechanism encompasses one finger (5) and the stop (18) thereof retains the string (2) at least occasionally in an accompanying movement.

## Revendications

1. Procédé pour séparer un groupe d'objets plats disposés en position verticale et en file, plus particulièrement des biscuits, amenés sur une table (26) sous la forme d'une file continue (2) et pour transporter ce groupe d'objets sur une chaine de transport inférieure (11), la file (2) étant amenée dans la zone du premier groupe à constituer, pas à pas dans le sens d'avance, et l'extrémité arrière (7) de la file étant déplacée momentanément dans le sens opposé par rapport au sens d'avance afin de constituer des points de séparation, **caractérisé** **en** **ce que** le groupe est basculé, dans un premier temps, dans un sens approximativement horizontal et transversal par rapport au sens d'avance de la file (2) et, dans un deuxième temps, vers la chaîne inférieure de transport (11) suivant une trajectoire arquée.

2. Procédé selon la revendication 1, caractérisé en ce que la file (2) est otée d'une position supérieure sur une table (26) et posée sur la chaîne de transport inférieure (11) située à une certaine distance en-dessous de cette table.

3. Procédé selon la revendication 2, caractérisé en ce que la chaîne de transport (11) avance en continu.

4. Dispositif permettant d'appliquer le procédé selon l'une quelconque des revendications 1 à 3, caractérisé en ce qu'il comprend un mécanisme de maintien et d'appui (5, 18, 35) permettant de retenir la file (2) et des moyens (34) permettant de constituer des groupes pour déplacer momentanément la file (2) dans le sens opposé par rapport au sens d'avance, ainsi que des moyens intermédiaires de transport sous la forme d'une bascule (4) munie d'une surface de support (10) basculante, pour faire basculer la surface de support (10), dans un premier temps, dans un sens approximativement horizontal et transversal par rapport au sens d'avance de la file (2) et, dans un deuxième temps, suivant une trajectoire arquéede manière à déposer le groupe dégagé de l'extrémité (7) de la file sur les moyens de transport (12, 12', 12'') situés en-dessous grâce aux moyens de transport intermédiaires (4).

5. Dispositif selon la revendication 4, caractérisé en ce que l'axe de basculement de la surface de support (10) des moyens de transport intermédiaires (4) et au moins l'axe longitudinal de l'extrémité de la file (2) sont parallèles entre eux.

6. Dispositif selon la revendication 4 ou 5, caractérisé en ce que les moyens de transport intermédiaires (4) présentent une surface de support (10) pour des objets rectangulaires ou ronds.

7. Dispositif selon l'une quelconque des revendications 4, 5 ou 6, caractérisé en ce que le mécanisme de maintien et d'appui (5, 18, 35) actionne un capteur (13) provoquant le déplacement de la file (2) dans le sens arrière.

8. Dispositif selon l'une quelconque des revendications 4 à 7, caractérisé en ce que le mécanisme de maintien et d'appui (5, 18, 35) actionne un système de régulation de masse et/ou de longueur (36).

9. Dispositif selon l'une quelconque des revendications 4 à 8, caractérisé en ce qu'il comporte un guide (1) pour une file (2) d'objets maintenus latéralement sur une table (26) par un frein (3) comprenant deux mâchoires (30, 31) montées de manière pivotante, dont l'ouverture simultanée est commandée par un poussoir, et en ce que la table (26) et le frein (3) sont reliés à des éléments (27, 34) et le frein (3) sont reliés à des éléments (27, 34) transmettant le mouvement en arrière à la table (26).

10. Dispositif selon l'une quelconque des revendications 1 à 9, caractérisé en ce que le mécanisme de maintien et d'appui comprend un doigt (5) dont la butée (18) maintient la file (2) au moins momentanément par un mouvement d'accompagnement.
